Europäisches Patentamt

European Patent Office

Office européen des brevets

(19)

(11) Publication number: **0 039 194**

**A1**

(12) **EUROPEAN PATENT APPLICATION**

(21) Application number: **81301751.4**

(22) Date of filing: **21.04.81**

(51) Int. Cl.³: **A 47 J 37/07**

(30) Priority: **18.04.80 CA 350206**

(43) Date of publication of application:
**04.11.81 Bulletin 81/44**

(84) Designated Contracting States:
**AT BE CH DE FR GB IT LI LU NL SE**

(71) Applicant: Hoglund, Allen C.
1154, Robson Street
Vancouver British Columbia(CA)

(72) Inventor: Hoglund, Allen C.
1154, Robson Street
Vancouver British Columbia(CA)

(74) Representative: Newens, Leonard Eric et al,
F.J. CLEVELAND CO. 40/43 Chancery Lane
London WC2A 1JQ(GB)

(54) **Portable barbecue machine.**

(57) A portable barbecue (10) comprising an open base member (11) with a flat cover member (25) hinged along an edge (26) of the base member (11) and closable over the open end thereof. A support grate assembly (34, 35) is provided over the base member (11) to maintain a combustible material above a bottom wall (12) of the base member. The cover member (25) has two rectangular hinge plates (30, 30') in the inner face thereof. The two rectangular plates (30, 30') are hingeable outwardly of the inside surface of the cover (25) and securable to a front vertical plate (37) to maintain the cover (25) substantially vertically above the bottom wall (12). The cover (25), the rectangular plates (30, 30') and the front vertical plate (37) constitute a flue wall about the support grate assembly. Ventilation is provided from the bottom of the flue wall to admit air to enhance combustion when the combustible material is ignited on the support grate assembly (34, 35).

./...

Fig.1

Fig.6

BACKGROUND OF INVENTION

(a)   Field of the Invention

The present invention relates to a barbecue device, and more particularly to a portable barbecue having a collapsible flue wall which is positionable about a support for a combustible product, such as charcoal.

(b)   Description of Prior Art

Various types of barbecue devices are known. The type of the present invention is portable and has many advantages over known portable type barbecues. Portable type barbecues are usually bulky, awkward to transport, and do not provide various features normally found in household type barbecues which are non-portable due to their large size.

SUMMARY OF INVENTION

It is a feature of the present invention to provide a compact, portable barbecue which substantially overcomes the disadvantages of the prior art type portable barbecues and which have all the features of large size barbecue devices.

Another feature of the present invention is to provide a portable barbecue having a collapsible flue wall which is securable in a barbecue case and which is mountable about a support grate mechanism for supporting combustible material.

Another feature of the present invention is to provide a portable barbecue having a support grate mechanism which is adjustable within a flue wall.

Another feature of the present invention is to provide a portable barbecue which resembles a suitcase, when not in use, and which is provided with vent means
for venting the back wall of a base member, during use,
and further having vent means to provide combustible
air to the bottom of a flue wall which surrounds a support grate for the combustible product.

Another feature of the present invention is
to provide a portable barbecue which is easy to assemble,
easy to clean, and easy to transport.

According to the above features, from a broad
aspect, the present invention provides a portable barbecue
comprising an open-ended base member having a bottom wall
and at least a rear and front vertical wall. A flat cover
member is hinged along an edge of the rear wall of the
base member and closable over the open end thereof. Support means is provided to maintain a combustible material
over the bottom wall of the base member. The cover member
has two rectangular plates each hinged along a hinge edge
connection to an inside surface of the cover adjacent a
respective opposed side thereof. The hinge edge connection extends traverse to the hinge edge of the cover member. The two rectangular plates are hingeable outwardly
of the inside surface of the cover and securable to a
front vertical plate to maintain the cover, the rectangular plates and the front vertical plate substantially
vertically above the bottom wall to constitute a flue
wall about the support means. Bottom vent means is also
provided to admit air from a lower end of the flue wall
to enhance combustion when the combustible material is
ignited on the support means.

## BRIEF DESCRIPTION OF DRAWINGS

A preferred embodiment of the present invention will now be described with reference to the example thereof illustrated in the accompanying drawings in which:

FIGURE 1 is an isometric view of the portable barbecue of the present invention;

FIGURE 2 is a top view of the portable barbecue showing the position of the flue wall;

FIGURE 3 is a fragmented perspective view showing the attachment of the rectangular plates to the front vertical plate;

FIGURE 4 is a fragmented section view showing the ventilation in the bottom wall of the base member and of the flue wall;

FIGURE 5 is a perspective view showing the construction of the grate support means;

FIGURE 6 is a side view showing the grate support means and the grate in position;

FIGURE 7 is a side view of the combustible product support grate; and

FIGURE 8 is a side view of the adjustable handle.

## DESCRIPTION OF PREFERRED EMBODIMENTS

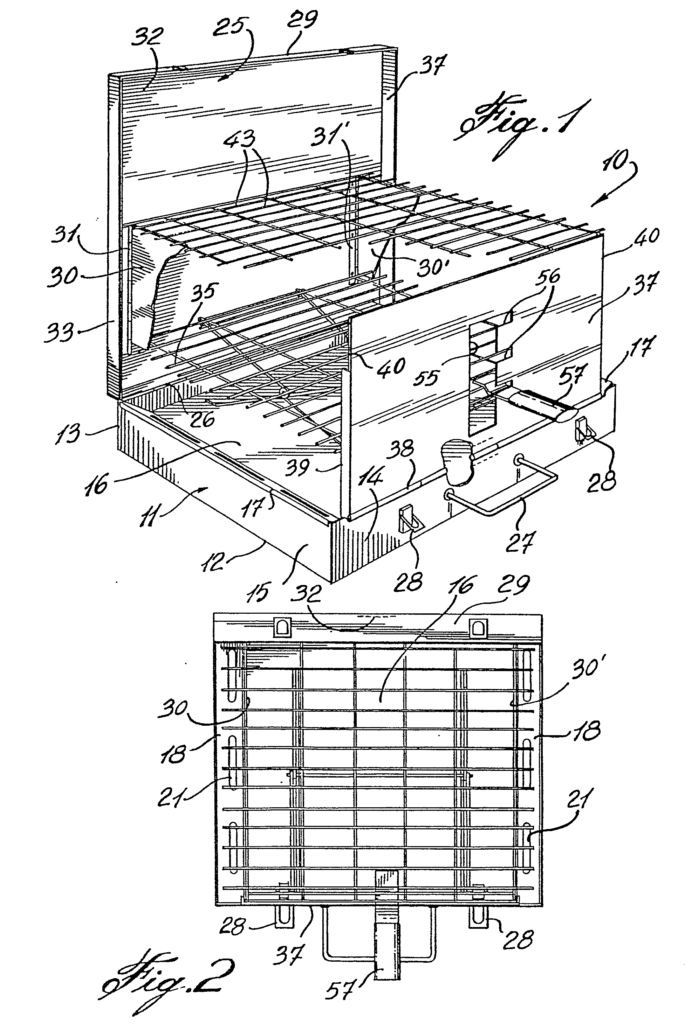

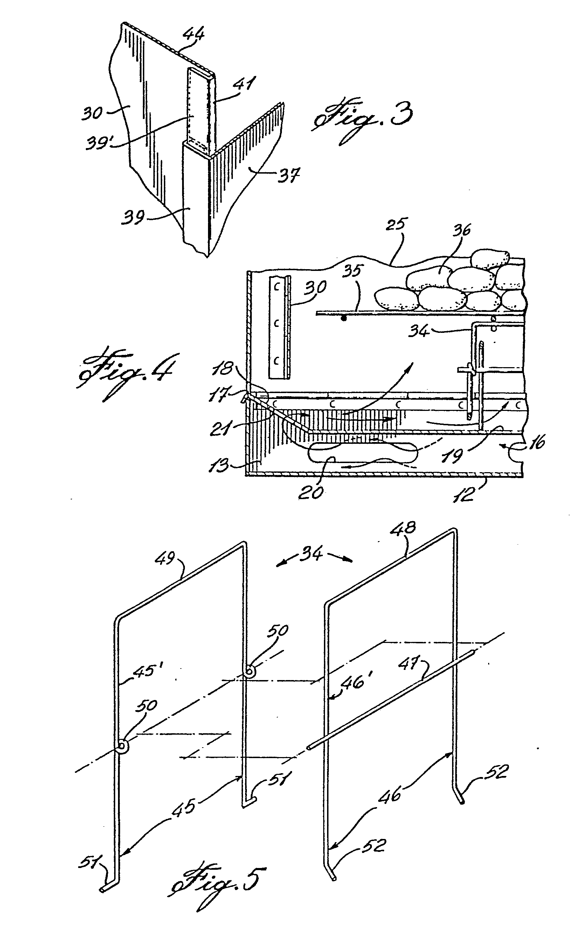

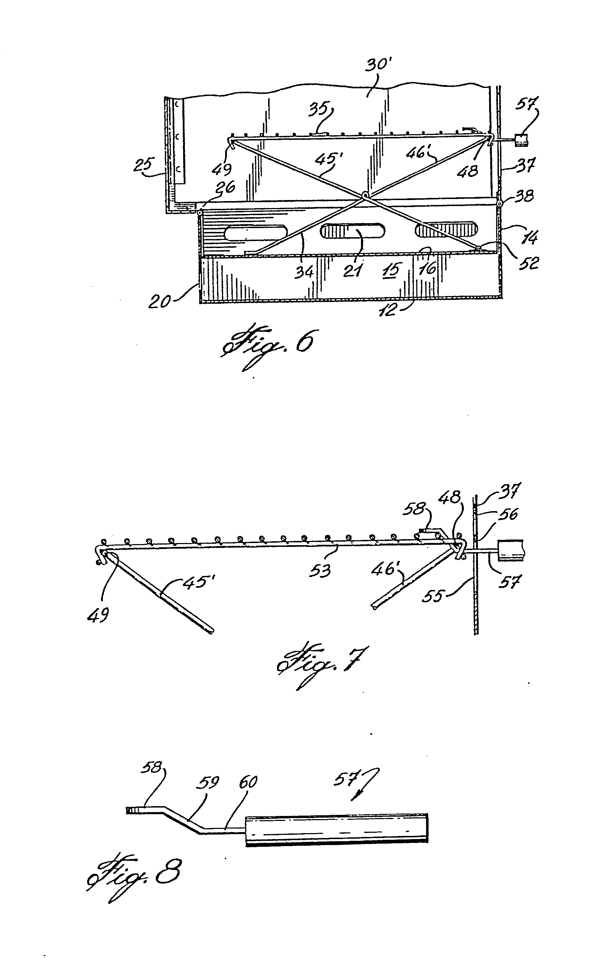

Referring now to the drawings, and more particularly to Figures 1 and 2, there is shown generally at 10, the portable barbecue of the present invention. The barbecue comprises an open-ended base member 11 having a bottom wall 12, a rear and front vertical wall 13 and 14, and opposed vertical side walls 15. An intermediate bottom wall 16 is supported in spaced relationship above the bottom wall 12 (see Fig. 4) and extends

- 5 -

from opposed vertical top edges 17 of the opposed vertical side walls 15, angularly inward of the open-ended base member 11 to define a sloping edge portion 18. Each sloping edge portion terminates at an edge of a large flat central portion 19 which extends parallel to and spaced above the bottom wall 12.

Vent holes 20 are provided in the rear wall 13 of the base member 11 and in the sloping edge portion 18 of the intermediate bottom wall 16 whereby ventilation is provided between bottom wall 12 and intermediate bottom wall 16. This ventilation prevents the bottom wall 12 from overheating during use of the barbecue as such heating could be transmitted to a support surface. Furthermore, by preventing excessive heating of the bottom wall 12, the paint thereon does not discolour and the cooling time of the unit after use is shortened. A plurality of openings 21 are also provided in the sloping edge portion 18 of the intermediate bottom wall 16 and these provide for the circulation of air in the area intermediate the bottom walls 12 and 16 and also feeds this air to the interior of a flue wall which will be described later.

Referring again to Figure 1, it can be seen that a cover member 25 is secured to the base member 11 along a hinge connecting edge 26 whereby when the barbecue is not in use, the cover member 25 can be hinged over the open end of the base member to constitute a carrying case. A handle 27 is provided in the front vertical wall 14 of the base member for this purpose. Also, attachment elements 28 are provided in this front wall and the front vertical wall 29 of the cover member to interlock the cover member 25 with the base member 11.

Referring now additionally to Figures 2 to 4, two rectangular plates 30 and 30' are secured along a hinge edge connection 31 and 31' attached to the inside surface 32 of the cover member 25. The hinge connections 31 and 31' extend substantially parallel to the vertical side walls 33 of the cover member 25 and transverse to the hinge edge connection 26. As herein shown, the base member and the cover member are substantially of a rectangular configuration.

A grate support means 34 maintains a combustible product support grate 35 elevated from the intermediate bottom wall 19. Thus, when in use, the hot coals 36 are supported on the grate 35 elevated from the intermediate wall 16 whereby minimum heat is transferred to the bottom wall 12, as previously described. In operation, the rectangular plates 30 and 30' are hinged out of the cover member 25 and are secured to a front vertical plate 37 which is connected to the front vertical wall 14 of the base member 11 along a bottom edge connection 38. Attachment means in the form of elongated U-shape flanges 39 are provided in the free vertical edges 40 of the front vertical plate 37 and also in the free vertical end edges 41 of each of the two rectangular hinge plates 30 and 30' whereby these edges may be interconnected. This interconnection is shown more clearly in Figure 3 and it can be seen that the flanges 39' of the rectangular plates 30 and 30' are disposed outwardly therefrom. The flanges 39 in the front vertical plate 37 are disposed inwardly of the plate 37 and at right angles thereto. Thus, by angulating the cover member 25 rearwardly, the bottom ends of the flanges 39' may be caused to enter the slot formed by the flanges 39 of the vertical plate 37 and slid thereinto by tilting the cover forwardly. Thus, both the U-shaped flanges 39 and 39' become interlocked with one another and maintains the wall 32 of the cover member 25 substantially vertically above the base member 11. When the rectangular plates 30 and 30' are connected to the front vertical plate 37, as shown in Figure 1, with the rectangular plates fragmented, the cover wall 32 in combination with the rectangular plates 30 and 30' and the front vertical plate 37 constitute a flue wall about the grate support means 34. As shown in Figure 4, the lower edge 42 of the rectangular plates 30 and 30' are supported above the intermediate bottom wall 16 to permit air to be drawn into the flue wall. As previously described, air will also enter from under the flue wall via the openings 21 in the sloping edge portion 18 of the intermediate bottom wall 16 and the openings 20 in the back wall of the base member. Thus, this air convection will enhance combustion when the combustible material 36 is ignited on the support grate 35. This will increase the combustion of the product 36 and the heat generated thereby as this heat is concentrated within the flue walls. The flue walls also shield the combustible product 36 against cross-winds and also provides for the support of a grate 43 along their top edges 44 and also the top edge of the front vertical plate. Another advantage of the flue wall is that it makes the barbecue safer to use and keeps the hot combustible product 36 isolated.

- 8 -                    **0039194**

Referring now additionally to Figures 5 and 6, there is shown the construction of the grate support means 34. It comprises two pairs of hinge legs 45 and 46, both interconnected together by a hinge pin 47. The legs 45 and 46 extend above the hinge connection to constitute support arms 45' and 46' thereabove whereby to support the grate 35 thereon. As herein shown, the legs and arms are constituted by a U-shape wire member with one said member having a hinge pin 47 welded thereon substantially mid-way of its side arms. An interconnecting top arm 48 is associated with one of the U-shape members and an interconnecting top arm 49 is associated with the other. The other U-shape member is looped at substantially mid-length of its side arms to constitute a hinge connection 50 to receive the hinge pin 47 therethrough. Thus, as shown in Figure 6, the support arms 45' and 46' are adjustable angularly to displace the interconnecting bridge arms 48 and 49 a predetermined distance above the intermediate bottom wall 16. This displacement is obtained by providing the free end of one of the U-shape members, herein the bottom ends of the legs 45 with an outwardly turned portion 51 which extends at right angles to the legs 45 and which is received in a clamp 52 secured to the intermediate bottom wall 16 of the base member so that these portions 51 are axially rotatable within the clamp 52 but maintained stationary. The free ends of the legs 46 of the other U-shape member are angulated to provide an angulate shoe portion 52 which is displaceable on the top surface of the intermediate bottom wall 16 as the bridge arms 48 and 49 are moved upwardly or downwardly from above the bottom wall 16.

As shown in Figure 7, the support grate consists of support wire members 53 having a plurality of spaced-apart top wire members 54. The support wire members are inwardly and downwardly turned at the free end to constitute an end retention portion whereby the bridge arms 48 and 49 of the U-shape members may be retained elevated from the intermediate bottom wall 16 a predetermined distance thereabove.

In order to provide for vertical adjustment of the support grate 35 above the intermediate bottom wall 16, an aperture 55 is provided in the front vertical plate 37 and has a plurality of horizontally disposed edge slots 56 spaced along the length thereof. The slots 56 are adapted to support a holding element 57 which engages the front end portion of the support grate 35 at a desired position or in a desired height as defined by the location of the slots 56.

Referring to Figure 8, there is shown the construction of the holding element 57 and it consists of a flat metal plate having a support free end section 58. An angled intermediate section 59, extends at 30° from the plane of the free end section 58 and merges into an engageable main portion 60. The portion 60 is substantially parallel to the portion 58, although this is not essential as the handle portion 60 may have any desired configuration. As shown in phantom line in Figure 7, the forward end of the holding element 57 is inserted through the slot 55 under the bridge arm 48 of the grate support 34 and over a forward one of the wires 54 of the grate 35 and thus positively engaging the grate and the support mechanism. By raising the holding element 57 through the main slot 55, the support bridge arm 48 causes the frame 34 to be displaced whereby raising the support bridge arms 48 and 49. Also, the grate 35 is maintained in a horizontal position by the actuation of the grate support frame 34 and may be retained at a desired height by displacing the holding element 57 sideways into a desired one of the edge slots 56. Thus, the holding element 57 will be supported along the lower edge of a desired slot 56 and maintain the support grate 35 at a desired height.

After use of the barbecue 10, the top grate 43 is removed and the holding element 57 is disengaged and removed. The support grate 35 is detached from the support frame and the rectangular plates 30 and 30' are disengaged from the front vertical plate 37. The coals and the cinders are brushed off the intermediate support wall 16 with the plate support member 34 collapsed over the intermediate bottom wall 16. The rectangular plates 30 and 30' are folded one above the other on the cover wall 32. The grate 35 is then positioned over the intermediate bottom wall 16 and the front vertical plate 37 folded thereover. The holding element 57 is also positioned on the bottom wall 16. The top grate 43 is then positioned over the folded front vertical plate 37 and the cover member 25 is then secured to the base member 11. Thus, the barbecue is now ready to be carried and for this purpose, the handle 27 is provided in the front vertical wall of the base member.

It is pointed out that the barbecue of the present invention has many other advantages. For example, because of the flue wall arrangement about the grate support for the combustible material, more intense heat is obtained. Further, because of the improved combustion, less coals are required to provide sufficient heat at the top of the flue wall. The improvement convection and combustion also results in less smoke being generated by the combustible product. Furthermore, it is pointed out that the barbecue device does not require any complex assembly by the consumer as with prior art barbecues where the basic construction of the units have to be permanently assembled. The barbecue device of the present invention is also very light in weight and easy to assemble and disassemble. In fact, the device may be disassembled immediately after use as the handle for the support of the grate is also used to remove the top grill and the grate supporting the coals. Thereafter, the side walls are removed, the cinders are cleared from the intermediate bottom vertical wall and the component parts are placed on the intermediate bottom wall and the cover is closed.

It is within the ambit of the present invention to cover any obvious modifications of the example of the preferred embodiment described herein, provided such modifications fall within the scope of the appended claims.

-1-

CLAIMS

1.      A portable barbecue comprising an open-
ended base member (11) having a bottom wall (12)
and at least a rear (13) and front (14) vertical
wall, a flat cover member (25) hinged along an
edge (26) of said rear wall (13) of said base
member (11) and closable over said open end,
support means (34, 35) to maintain a combustible
material above said bottom wall (12) of said
base member (11), said cover member (25) having
two rectangular plates (30, 30') each hinged
along a hinge edge connection (31, 31') to an
inside surface (32) of said cover (25) adjacent
a respective opposed side thereof, said hinge
edge connection (31, 31') extending transverse
to said hinged edge of said cover member, said
two rectangular plates (30, 30') being hingeable
outwardly of said inside surface of said cover (25)
and securable to a front vertical plate (37) to
maintain said cover (25), the rectangular plates
(30, 30') and the front vertical plate (37)
substantially vertically above the bottom wall (12) to constitute a flue wall about said support
means (34); and bottom vent means (21) to admit
air from a lower end of said flue wall to enhance
combustion when said combustible material is
ignited on said support means (34).

2.    A portable barbecue as claimed in Claim 1
wherein said base member (11) has opposed vertical
side walls (15), an intermediate bottom wall (16)
supported spaced above said bottom wall (12) of
said base member (11), vents (20) in at least one
of said rear (13), front (14) or side walls (15),
said bottom vent means (21) being through bores
in said intermediate bottom wall (16).

3.    A portable barbecue as claimed in Claim 2
wherein said intermediate bottom wall (16) extends
from opposed vertical top edges (17) of said
opposed vertical side walls (15) angularly inward
of said open-ended base member (11) to define
a sloping edge portion (18), each sloping edge
portion (18) terminating at an edge of a large flat central portion (19) extending parallel
to and spaced above said bottom wall (12).

4.      A portable barbecue as claimed in Claim 3
wherein said through bores comprise a plurality
of openings (21) in each said sloping edge
portion (18), said plurality of openings (21)
permitting air flow between said bottom wall (12)
and intermediate bottom wall (16) through said
vents (21) to cool said bottom wall during
combustion of said combustible material and
further to provide some of said combustible
air to said flue.

5.      A portable barbecue as claimed in Claim 1
wherein said bottom vent means (21) is constituted
by a space between said bottom wall (16) and a
lower edge (42) of said rectangular plates
(30, 31') of said flue wall.

6.      A portable barbecue as claimed in Claim 1
wherein said front vertical plate (37) is hinged
to said front vertical wall (14) of said base member (11), and attachment means (39) in opposed vertical edges (40) of said front vertical wall (14) for attachment to a respective one of said two rectangular plates (30, 30').

7. A portable barbecue as claimed in Claim 6 wherein said attachment means is an elongate U-shape right angle flange (39) in a vertical edge portion (40) of said front vertical wall (37), said two rectangular plates (30, 30') also having a U-shape flange (39') in a free vertical edge (41) thereof, said U-shape flange (39') of said rectangular plates (30, 30') being slidingly engaged in a respective one of said U-shape flange (39) of said front vertical wall (37).

8. A portable barbecue as claimed in Claim 1 wherein said support means comprises two pairs of hinge legs (45, 46) hingedly interconnected on a hinge axis (47), said legs (45, 46) extending above said hinge axis (47) to define opposed support arms (45', 46'), a support grate (35) on said support arms (45', 46'), one of said
pairs of legs (45) being retained for axial
rotation on said bottom wall (12); the other
pair of legs (46) being displaceable on said
bottom wall (12) whereby displacement of said
other pair of legs (46) provides vertical
adjustment of said support grate (35) above
said bottom wall (12).

9. A portable barbecue as claimed in Claim 7
wherein each pair of said support arms (45', 46')
comprises an extension portion of each hingeleg
(45, 46), and a cross-member (48, 49) interconnecting a top end of said extension portion,
said cross-member (48, 49) associated with said
displaceable legs (45, 46) being displaceable
vertically adjacent said front vertical wall (37),
aperture means (55) in said front vertical wall (37)
for maintaining a support grate holding element (57)
at desired positions.

10. A portable barbecue as claimed in Claim 9
wherein said holding element (57) is a member

-6-

having a flat plate-like support end, said
support end having a free end section (58),
an angled intermediate section (59) extending
from said support end to an engageable main
portion (60), said angled intermediate section (59)
maintaining said cross-member (48) adjacent said
front vertical wall (37) substantially stationary
with respect to a front engagement end of said
support grate (35).

11.    A portable barbecue as claimed in Claim 9
wherein said cross-member (48) associated with
said legs (45, 46) retained on said bottom wall
(12) being displaceable under said support
grate (35) and maintained in the same horizontal
plane as said other cross-member (49) as said
support grate is displaced vertically.

12.    A portable barbecue as claimed in Claim 8
wherein said support grate (35) has opposed
engagement edges for retaining a respective one
of said opposed support arms (45',46') whereby to
retain said legs (45, 46) and arms (45', 46') in a fixed position with said support grate (35)
spaced a predetermined distance above said
bottom wall (12).

13.     A portable barbecue as claimed in Claim 3
wherein said front vertical plate (37) is hinged
along a top edge of said front vertical wall (14)
of said base member (11) and foldable horizontally
over said flat central portion (19), said support
means (34, 35) being collapsible over said flat
central portion (19).

14.     A portable barbecue as claimed in Claim 13
wherein said flat cover member (25) is a rectangular
member having a peripheral vertical wall (33), in
the free edge thereof to the side and front of
said hinge edge, said base member (11) being a
rectangular member, said peripheral vertical
wall (33) overlapping a top edge portion of
said vertical side walls (15) and front vertical
wall (14) of said base member (11) when said
cover (25) is hinged thereover, a handle (27)
in said front vertical wall, and engaging means (28) to positively engage said cover (25) with said base member (11).

15.     A portable barbecue as claimed in Claim 1 wherein a food support grate is engageable over an open top end of said flue wall.

Fig.1

Fig.2

1/3

0039194

Fig.3

Fig.4

Fig.5

Fig. 6

Fig. 7

Fig. 8

## European Patent Office

## EUROPEAN SEARCH REPORT

| DOCUMENTS CONSIDERED TO BE RELEVANT | | |
|---|---|---|
| Category | Citation of document with indication, where appropriate, of relevant passages | Relevant to claim |
| | US - A - 2 474 043 (ETCHES) <br> * Whole document * <br><br> -- | 1,8,13, 14,15 |
| | US - A - 2 477 529 (SPRINKLE et al.) <br> * Whole document * <br><br> -- | 1,2,4 |
| | US - A - 2 994 316 (BRENDER) <br> * Whole document * <br><br> -- | 1,2,4 |
| | FR - A - 1 508 250 (AUVRAY) <br> * Whole document * <br><br> -- | 8,9, 11,12 |
| | US - A - 3 857 380 (HANSMAN) <br> * Whole document * <br><br> ----- | 8,9,10 |

CLASSIFICATION OF THE APPLICATION (Int. Cl.³)

A 47 J 37/07

TECHNICAL FIELDS SEARCHED (Int. Cl.³)

A 47 J
F 24 B

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 29-07-1981 | SCHARTZ |

EPO Form 1503.1  06.78